# DEMANDE DE BREVET EUROPEEN

(11) **EP 1 369 823 A1**
(43) Date de publication de la demande: **10.12.2003**
(21) Numéro de dépôt: 03291169.5
(22) Date de dépôt: 20.05.2003
(51) Int. Cl.: G06T 17/00

(54) **Procédé et système de construction à distance d'une surface tridimensionnelle**

(30) Priorité: 03.06.2002 FR 0206805
(71) Demandeur: FRANCE TELECOM, 75015 Paris (FR)
(72) Inventeur: Hennion, Bernard, 38410 St Martin d'Uriage (FR)
(74) Mandataire: Casalonga, Axel

(57) **Abrégé**

Procédé de construction d'une surface tridimensionnelle d'un corps virtuel en vue d'une interaction d'un élément mobile matériel avec ledit corps, dans lequel on déplace l'élément mobile du système, et on construit une modélisation par maillage en fonction de la position de l'élément mobile, ladite construction comprenant des étapes de :
a) calcul du sommet du maillage le plus proche de l'élément mobile;
b) calcul des facettes du maillage voisines dudit sommet;
c) pour chacune des facettes voisines, calcul de la projection de l'élément mobile sur la facette;
d) calcul du point de la facette la plus proche de l'élément mobile, si ladite projection est extérieure à ladite facette;
e) détermination d'une première facette présentant une distance minimale entre le plan de la première facette et l'élément mobile;
f) détermination d'une deuxième facette présentant une distance minimale avec l'élément mobile;
g) Si les première et deuxième facettes sont confondues, calcul de la normale généralisée, combinaison des normales aux sommets de la facette; et
h) calcul du module de la force proportionnel à la profondeur de pénétration de l'élément mobile dans le maillage.

## Description

La présente invention relève du domaine de la construction à distance d'une surface virtuelle, notamment d'une surface gauche.

Pour la transmission de retour d'effort à distance, notamment dans le cadre du développement de mondes virtuels répartis et du développement de moyens de téléprésence, le besoin apparaît de déterminer les coordonnées d'une surface éloignée d'un moyen de calcul ou de commande, notamment dans un but d'étalonnage.

Les méthodes classiques, notamment d'interpolation, de lissage, de Lagrange, de Hermite..., utilisent généralement des données de position dans l'espace prises judicieusement pour obtenir un résultat proche du modèle réel. Les calculs qui en découlent sont lourds et ne peuvent guère être effectués en temps réel. La qualité du résultat dépend du nombre de points connus de l'objet réel, de la pertinence des points mesurés et de la quasi homothétie des modèles virtuel et réel.

De la même façon que les techniques de codage de vidéo numérique s'appuient sur les connaissances de la perception visuelle, et les techniques de reconnaissance vocale sur les connaissances de l'ouïe, les techniques haptiques (du grec haptos : la main) s'appuient sur les connaissances des gestes.

Il existe deux sortes de gestes fins réalisables avec la main : les gestes balistiques, comme déplacer la main vers un verre pour le saisir et les gestes avec contre-réactions du toucher, comme celui qui permet après saisie du verre et fermeture de la pince pouce-doigts, de porter le verre à sa bouche. Le cerveau est alors informé en permanence de la force avec laquelle la main enserre le verre, de son poids qui dépend de la quantité de liquide. Le cerveau réagit alors en donnant l'ordre moteur de "pincer" suffisamment ce verre pour qu'il ne tombe pas, mais pas trop toutefois, pour ne pas le casser, ni dépenser une énergie inutile.

Les gestes balistiques activent l'arc moteur mais ils n'activent pas l'arc sensitif en retour du toucher. Le retour d'informations peut être une représentation visuelle de l'espace, mais aussi une carte gestuelle, c'est-à-dire une représentation mentale apprise ou innée câblée dans le cerveau et qui génère automatiquement la séquence des ordres moteurs des muscles de l'épaule, du bras, de la main pour réaliser ce geste balistique en fonction d'une certaine représentation mentale de l'espace, notamment de la distance présumée main-verre.

Pour les gestes balistiques, il est suffisant de transmettre au cerveau les informations sur le geste avec une fréquence d'échantillonnage de 100 Hz. Cela signifie que si on envoie un échantillon du signal toutes les 10 ms, le signal transmis contiendra toute l'information pertinente du geste balistique.

Les gestes avec contre-réactions du toucher activent en même temps l'arc moteur et l'arc sensitif. Le cerveau ferme la boucle et le cycle complet chez l'homme dure moins de 1 ms. La bande passante des neurones sensitifs situés dans les bouts des doigts, c'est-à-dire la fréquence maximale du signal mécanique que ces neurones sont capables de détecter et de transmettre au cerveau, est supérieure à 500 Hz. Si on veut pouvoir coder dans un ordinateur un geste fin, il faut que le système à retour d'efforts utilisé ait lui-même une fréquence de fonctionnement élevée, au moins égale, d'après le théorème de Shannon, au double de la bande passante des doigts.

Dans la pratique, les systèmes à retour d'efforts sur une machine locale fonctionnent à une fréquence typique de 1 KHz en boucle fermée locale, c'est-à-dire qu'une rétroaction est calculée puis exercée sur leurs moteurs puis perçue par la main toutes les 1/1000 de seconde. Cela permet d'éviter l'effet dit de la "brosse à dents électrique" : l'instrument que l'on tient en main ne doit pas donner l'impression de vibrer.

Cette fréquence de 1 KHz résulte du compromis suivant : elle ne doit être ni trop basse pour pouvoir restituer finement l'impression tactile, ni trop haute pour laisser suffisamment de temps à l'ordinateur pour calculer la force de contre-réaction qui va représenter, dans le monde virtuel mécanique, la simulation fine du geste effectué.

Si maintenant on désire transmettre via un réseau de télécommunications, des gestes fins codés par le système à retour d'efforts et des gestes fins avec contre-réactions, le problème se complique du fait de la latence généralement bien supérieure introduite par le réseau lui-même.

Ainsi, la latence en technologie RNIS est de 30 ms, en technologie ADSL de l'ordre de 200 ms, et sur Internet elle peut atteindre 6 s ou même provoquer le rejet pur et simple du message. Sur ADSL et Internet, la latence varie du fait de la nature asynchrone des réseaux. La cadence de 1 KHz est donc beaucoup trop élevée pour pouvoir être maintenue si la boucle fermée inclut un aller-retour via le réseau - le geste est codé puis transmis via le réseau, il est appliqué à un objet distant, la contre-réaction de cet objet est à son tour codée et transmise en retour via le réseau.

Un geste balistique peut être transmis avec un retard de l'ordre de grandeur de 10 ms. En effet, la vue est un sens monodirectionnel : l'oeil est une sorte de caméra enregistrant une scène et le cerveau, à une tolérance près, peut percevoir avec un léger retard le film visuel précis sans perturber l'exécution du geste.

Au contraire, un geste fin avec contre-réaction nécessite de boucler en moins d'une milliseconde, l'aller-retour de décision de l'intensité de la force à exercer
- émission de l'ordre au muscle via l'arc sensitif moteur,
- action mécanique de la main sur le verre,
- sensation du toucher du verre (augmentation de la pression de contact) au niveau des bouts des doigts, et
- retour vers le cerveau via l'arc sensitif tactile de cette information pour permettre au cerveau de décider l'ajustement de la force de la "pince" formée par la main.

On connaît, par le document FR-A-2 816 722, un procédé de commande d'un élément à retour d'effort apte à interagir avec un autre élément, dans lequel on effectue une modélisation locale pour obtenir une consigne destinée à l'élément à retour d'effort à partir d'une variable mesurée par ledit élément à retour d'effort, de variables intrinsèques audit élément à retour d'effort, d'une estimation d'une interaction extérieure sur l'élément à retour d'effort, et d'une variable d'état de l'élément à retour d'effort, et on effectue une modélisation distante des interactions et des variables d'état de l'autre élément avec mise à jour lors de la réception de données reçues d'un autre système situé à distance, on élabore et on émet vers l'autre système un message de recalage. Un tel procédé donne satisfaction.

Le besoin est apparu d'obtenir une modélisation fine et nécessitant peu de ressources de calcul. La modélisation peut être adaptée à un tel procédé. En effet, l'utilisateur interagit manuellement avec un monde numérique virtuel, plus particulièrement avec un modèle d'une surface gauche qui doit se rapprocher le plus possible d'un corps réel ayant ladite surface gauche comme surface extérieure.

Pour une interaction manuelle avec un monde virtuel, on peut se baser sur une interaction avec les sommets du maillage de la modélisation, ou encore une interaction avec des voxels. Toutefois, les sommets définissent la surface du corps virtuel touchée de manière discontinue. Cela entraîne une sensation de saccade du toucher, qui dépend de la finesse du maillage, que l'on doit alors accroître pour retrouver un grain acceptable de toucher. Un maillage très fin surcharge, voire empêche les moyens de calcul du système de calculer le rendu haptique en temps réel. La méthode des voxels fournit un retour de force hâché et peu précis.

L'invention propose un procédé de modélisation permettant d'obtenir un toucher continu, voire même dérivable, quelle que soit la résolution du maillage du corps virtuel, avec un temps de calcul rapide compatible avec le temps réel nécessité par un système à retour d'effort. On peut ainsi autoriser l'encodage très précis de geste, comme l'exige par exemple un acte de télémédecine chirurgicale faiblement invasive.

Le procédé de construction, selon un aspect de l'invention, est destiné à une surface tridimensionnelle d'un corps virtuel en vue d'une interaction d'un élément mobile matériel avec ledit corps virtuel. Un utilisateur déplace l'élément mobile du système et une unité de calcul construit une modélisation par maillage en fonction de la position de l'élément mobile.

Ladite construction comprend des étapes de calcul du sommet du maillage le plus proche de l'élément mobile, de calcul des facettes du maillage voisines dudit sommet, pour chacune des facettes voisines précédemment calculées, de calcul de la projection de l'élément mobile sur la facette, de calcul du point de la facette la plus proche de l'élément mobile, si ladite projection est extérieure à la facette, de détermination d'une première facette présentant une distance minimale entre le plan de la première facette et l'élément mobile, de détermination d'une deuxième facette présentant une distance minimale avec l'élément mobile, si les première et deuxième facettes sont confondues, de calcul de la normale généralisée combinaison des normales au sommet de la facette, et de calcul du module de la force proportionnelle à la profondeur de pénétration de l'élément mobile dans le maillage. On obtient ainsi une modélisation offrant un rendu précis et peu consommateur de ressources de calcul du contact d'un élément mobile avec un corps. On peut tenir compte de l'élasticité du corps. Ceci présente de nombreux avantages, par exemple dans le cas d'une application de télé-échographie où l'élément mobile est alors une sonde échographique mise en contact avec l'abdomen d'une patiente.

Dans un mode de réalisation de l'invention, on calcule ensuite la direction de la force en fonction de la normale généralisée.

Dans un mode de réalisation de l'invention, préalablement à l'étape de calcul du point de la facette la plus proche de l'élément mobile, on calcule le caractère intérieur ou extérieur du point de projection de l'élément mobile sur la facette. Le caractère intérieur ou extérieur s'entend par rapport au corps virtuel. Dans les calculs, on considère l'élément mobile comme étant en contact par un point avec le corps virtuel.

Dans un mode de réalisation de l'invention, préalablement à l'étape de détermination d'une première facette présentant une distance minimale entre le plan de la première facette et l'élément mobile, on calcule la profondeur de pénétration de l'élément mobile sous le plan de la facette. On peut calculer la profondeur algébrique de pénétration.

Avantageusement, on calcule les coordonnées barycentriques de ladite projection dans la facette, la normale généralisée étant une combinaison des normales aux sommets de la facette pondérée par lesdites coordonnées barycentriques.

Le calcul du module de la force peut être effectué en fonction d'une dureté du corps virtuel. Ladite dureté peut être paramétrable.

Avantageusement, si la deuxième facette est différente de la première facette et si l'élément mobile est sous le plan de la deuxième facette, c'est-à-dire considéré comme étant à l'intérieur du corps virtuel, on calcule la profondeur de pénétration de l'élément mobile sous le plan de la deuxième facette, profondeur égale à la distance entre la deuxième facette et l'élément mobile.

Si la deuxième facette est différente de la première facette et si l'élément mobile n'est pas sous le plan de la deuxième facette, on peut calculer une troisième facette adjacente à la deuxième facette du côté indiqué par ses coordonnées barycentriques.

Si l'élément mobile est sous le plan de la troisième facette, on peut calculer la profondeur de pénétration de l'élément mobile sous le plan de la deuxième facette, profondeur égale à la distance entre la deuxième facette et l'élément mobile.

Si l'élément mobile n'est pas sous le plan de la troisième facette, on en déduit que l'élément mobile est à l'extérieur du corps virtuel.

On peut calculer le couple ramené à l'élément mobile, dans le cas des systèmes à retour d'effort angulaire.

L'invention propose également un programme d'ordinateur comprenant des moyens de code-programme pour mettre en oeuvre les étapes du procédé ci-dessus lorsque le programme fonctionne sur un ordinateur.

On peut prévoir un mode de sculpture ou de déformation virtuelle du corps avec calcul des déplacements des sommets voisins du point d'impact de l'élément virtuel sur la surface selon la forme de l'élément mobile et en fonction de la viscosité réglable dudit corps.

Bien entendu, la forme de l'élément mobile, qui permet de prendre en compte l'effet d'un élément mobile qui, réellement, n'est pas ponctuel et donc de parvenir à une modélisation plus juste, est paramétrable.

On peut également prévoir un mode de peinture avec une étape de génération de pixels colorés dans des cartes de texture bidimensionnelles associées à chacune des facettes.

L'invention propose également un système de construction à distance d'une surface tridimensionnelle d'un corps virtuel, ledit système comprenant un élément mobile apte à entrer en contact virtuel avec ladite surface à construire et pourvu d'actionneurs et de capteurs de force et/ou de position, une unité de calcul, une modélisation de la surface stockée dans une mémoire, ladite modélisation comprenant un maillage en fonction de la position de l'élément mobile, et un moyen pour calculer le sommet du maillage le plus proche de l'élément mobile, calculer des facettes du maillage voisines dudit sommet, pour chacune des facette voisines, calculer la projection de l'élément mobile sur la facette, calculer le point de la facette le plus proche de l'élément mobile, si la projection est extérieure à la facette, déterminer une première facette présentant une distance minimale entre le plan de la première facette et l'élément mobile, déterminer une deuxième facette présentant une distance minimale avec l'élément mobile, si les première et deuxième facettes sont confondues, calculer la normale généralisée, combinaison des normales au sommet de la facette, et calculer le module de la force proportionnelle à la profondeur de pénétration de l'élément mobile dans le maillage.

Dans un mode de réalisation de l'invention, le maillage est triangulaire.

Grâce à l'invention, on obtient un encodage précis et régulier des interactions manuelles d'un utilisateur avec un objet tridimensionnel d'un monde virtuel.

L'invention permet de créer une surface implicite haptique dérivable, s'appuyant sur un maillage triangulaire tridimensionnel d'un corps virtuel. Cette surface passe par les points du maillage et en ces points sa normale est égale à la normale à la forme utilisée pour le rendu visuel. Une force normale généralisée est construite, qui donne d'illusion d'un toucher haptique fin, continu et bien lisse. Une carte des duretés variables peut être construite par télécalibrage statique.

L'invention peut s'appliquer avantageusement dans le domaine de la télémédecine, des arts, de la sculpture, d'aide à la construction de la représentation mentale de l'espace tridimensionnel pour les personnes déficientes visuellement.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue schématique d'un système selon un mode de réalisation de l'invention ;
- la figure 2 est une vue détaillée des systèmes S1 et S2 de la figure 1 ; et

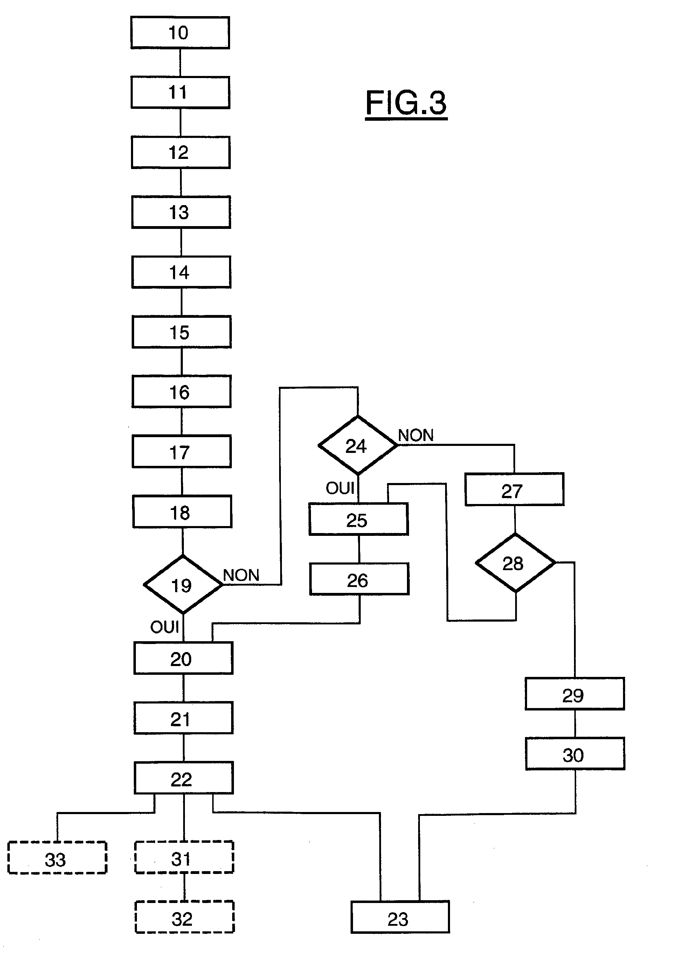

- la figure 3 est un organigramme des étapes de procédé.

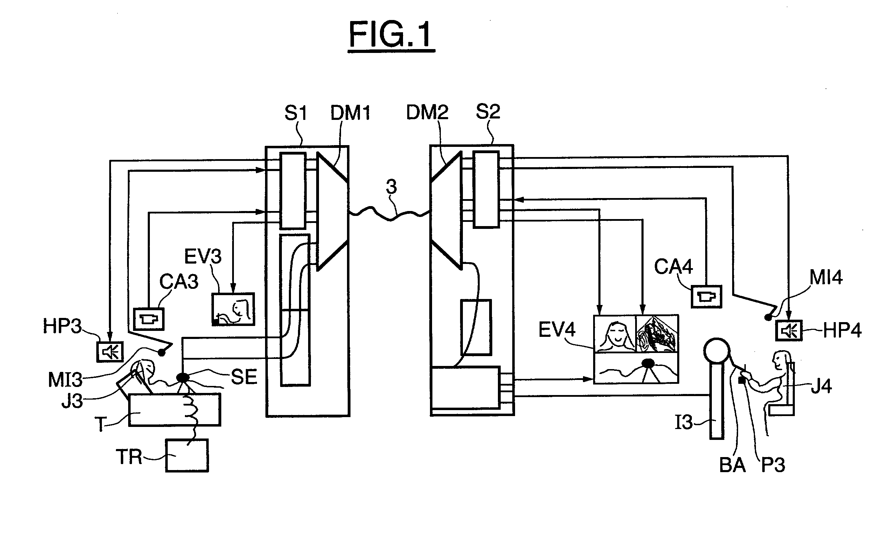

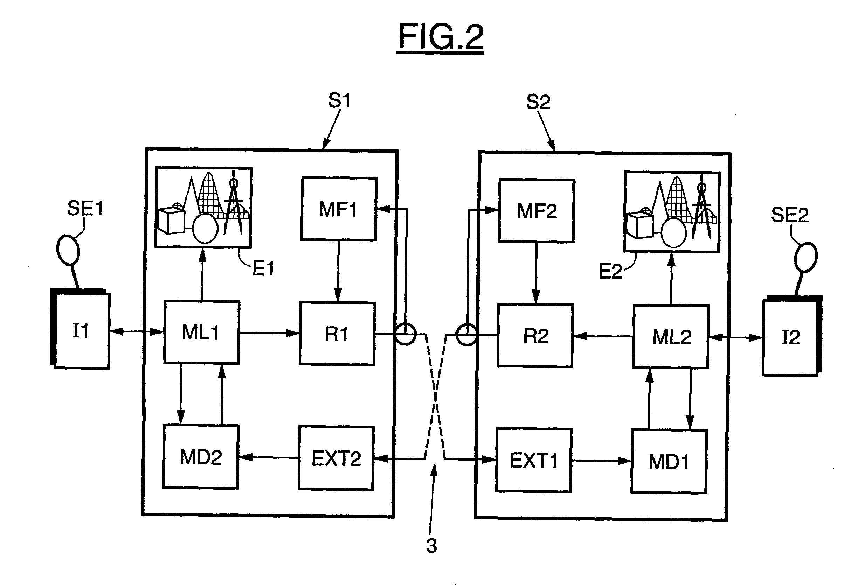

Un mode de réalisation de l'invention destiné à l'échographie est illustré sur la figure 1. Il est prévu un système de commande S1 installé par exemple dans un établissement non spécialisé en obstétrique, dans un établissement d'une ville de petite taille, ou encore dans un véhicule pour la desserte de zones rurales. Le système S2 est installé dans un établissement hospitalier spécialisé où des opérateurs hautement qualifiés sont disponibles pour réaliser les opérations d'échographie, par exemple dans un centre hospitalier régional ou universitaire. Une patiente J3 repose sur un lit ou une table T. Une sonde échographique SE est en contact avec son abdomen. Un tableau de réglage TR de paramètres de la sonde SE est installé à proximité. La sonde SE est relié au système S1 et transmet des données d'images échographiques audit système S1, et échange des données relatives à la position et aux effets exercés avec le système S1. Pour des raisons de clarté du dessin, le support de la sonde SE qui pourrait être un bras articulé n'a pas été représenté ici. Toutefois, on comprend qu'il s'agit d'un support permettant un déplacement dans l'espace selon plusieurs degrés de liberté, en général au moins six pour pouvoir prendre une position adaptée en contact avec l'abdomen de la patiente J3. Il est prévu un microphone MI3 et un haut-parleur HP3 relié au système S1 et permettant à la patiente de converser avec l'opérateur situé à distance. Il est encore prévu une caméra CA3 orientée vers la patiente J3 et un écran vidéo EV3 permettant à la patiente de voir soit l'opérateur situé à distance, soit des images échographiques. La caméra CA3 et l'écran vidéo EV3 sont également reliés au système S1. Les systèmes S1 et S2, outre les éléments qui ont été décrits en référence aux figures 1 et 2, comprennent chacun un multiplexeur-démultiplexeur DM1 et DM2 pour permettre la transmission de données sur le réseau 3 qui peut être par exemple de type ADSL.

Du côté du système S2, l'opérateur J4 qui pourra être un médecin spécialisé en échographie manipule une poignée P3 dont la position dans l'espace va être répliquée par la sonde SE. La poignée P3 est reliée à un bras articulé BA lui-même relié à une interface 13 du genre des interfaces I1 et I2 décrites ci-dessus et comprenant un ou plusieurs actionneurs et un ou plusieurs capteurs de position et capteurs d'effort. La mesure de l'effet peut être effectuée par une mesure d'une grandeur énergétique des actionneurs, par exemple par le courant consommé encore au moyen d'une jauge de contrainte. L'interface I3 est relié au système S2.

I1 est encore prévu une caméra CA4 dirigée vers l'opérateur J4 et dont les images pourront être affichées sur l'écran EV3, un microphone MI4 et un haut-parleur HP4 permettant à l'opérateur J4 de converser avec la patiente J3. Ces éléments sont reliés au système S2. Un écran vidéo EV4 de grande dimension permettra d'afficher simultanément une pluralité d'images, par exemple une image échographique, une image du visage de la patiente J3 et une image montrant le positionnement de la sonde SE sur l'abdomen de la patiente.

Comme on peut le voir sur la figure 2, un ensemble d'échographie comprend un élément SE1 de forme proche d'une sonde échographique pour l'utilisateur U1 et une sonde échographique SE2 pour une patiente non représentée. Chaque élément SE1, SE2 est relié à une interface I1, I2 comprenant un moyen pour exercer une force sur l'élément SE1, SE2, par exemple un actionneur du genre vérin électrique, et un moyen pour mesurer la force exercée par l'utilisateur U1 et la patiente sur l'élément SE1, SE2, par exemple un capteur de couple ou encore une jauge de contrainte. L'interface I1, I2 comprendra également une carte d'acquisition reliée au moyen d'exercice d'une force et au moyen de mesure et capable d'échanger des données numériques avec un autre système numérique tel qu'un ordinateur.

Chaque interface II, I2 est reliée à un système de commande S1, S2. Dans le cas illustré ici, les systèmes S1 et S2 sont identiques. Seul le système S1 sera décrit. Toutefois, on peut envisager des modes de réalisation dans lesquels l'un des deux systèmes est de structure simplifiée par rapport à l'autre.

De façon générale, le système S1 peut se présenter sous la forme d'un ordinateur, du genre ordinateur personnel généralement pourvu d'au moins un micro-processeur, de mémoires rémanente et non rémanente, d'un bus de communication, de ports d'entrée et de sortie et d'un ou plusieurs logiciels stockés en mémoire et aptes à être exécutés par le micro-processeur.

Le système S1 est relié d'une part à l'interface I1 par exemple par un bus de type RS 232 et au système S2 par un réseau de communication référencé 3 dans son ensemble et qui pourra être de type synchrone par exemple RNIS ou asynchrone, de type ATM, UMTS ou encore Internet (TCP/IP). Le système S1 est situé à proximité de l'utilisateur U1, par exemple dans la même pièce. Le système S2 est situé à distance du système S1, distance qui peut aller de quelques mètres à quelques milliers de kilomètres. En d'autres termes, le système S1, l'interface I1, l'élément SE1 et l'utilisateur U1 sont disposés de façon locale tandis que le système S2, l'interface 12, l'élément SE2 et la patiente sont disposés de façon distale par rapport aux précédents.

Plus précisément, le système S1 comprend un modèle local ML1 apte à envoyer une consigne à l'interface I1 et à recevoir de ladite interface I1 une variable mesurée par l'interface I1, par exemple la position X de l'élément SE1. La consigne peut être une variable de force ou de couple et est notée Fₑ. Le système S1 comprend un modèle distant MD2 prévu pour estimer un état du modèle local ML2 du système S2. Le modèle distant MD2 du système S1 est apte à recevoir des données en provenance du système S2, à recevoir des données en provenance du modèle local ML1 et à émettre des données vers le modèle local ML1. Plus particulièrement, le système S1 comprend un extrapolateur EXT2 recevant des données en provenance du système S2 par l'intermédiaire du réseau de communication 3 pour traiter un message de recalage provenant du système S2 et transmettre des données de mise à jour au modèle distant MD2 en fonction du message de recalage reçu en dernier.

Le système S1 comprend un écran E1 relié au modèle local ML1 pour l'affichage de données issues du modèle local ML1, par exemple une courbe retraçant l'évolution des forces exercées et des positions des éléments SE1 et SE2.

Le système S1 comprend un recaleur R1 recevant des données du modèle local ML1 et apte à envoyer des données de sortie à destination du système S2, en particulier à destination de l'extrapolateur EXT1 du système S2. Le recaleur R1 est apte à effectuer une préparation de données pour les émettre sous la forme d'un message de recalage qui pourra comprendre une date, la position X de l'élément SE1, la force F exercée sur l'élément SE1 à ladite date ainsi que la force exercée sur l'élément SE1 à une date antérieure.

Le système S1 comprend, en outre, un modèle fantôme MF1 qui reçoit également les messages de recalage en provenance du recaleur R1 du système S1 et qui effectue une estimation des variables d'état de l'interface I1 d'après les messages de recalage émis par le recaleur R1 et reçu par le système S2. En d'autres termes, le modèle fantôme MF1 effectue une estimation d'après les mêmes données que celles reçues par le modèle distant MD1 du système S2. Ainsi, le modèle fantôme MF1 permet de modéliser les variables de l'interface I1 telles qu'elles sont modélisées par le système S2.

La sortie du modèle fantôme MF1 est reliée au recaleur R1 qui compare l'estimation des variables d'état provenant du modèle fantôme MF1 et les variables d'état provenant du modèle local ML1. En cas de différence supérieure à un seuil prédéterminé, le recaleur R1 émet un message de recalage destiné au modèle fantôme MF1 et à l'extrapolateur EXT1 du système S2. Ainsi, le volume de données échangé entre les systèmes S1 et S2 est relativement réduit dans la mesure où un message de recalage n'est émis que si l'un des deux systèmes S1, S2 estime que l'autre système S2, S1 n'est plus en mesure d'estimer convenablement ces variables d'état.

Plus spécifiquement, la construction d'un modèle distant peut être effectuée comme suit.

Une unité de calcul du système, à une étape référencée 10, effectue un calcul du sommet du maillage triangulaire tridimensionnel le plus proche d'un point particulier de l'élément mobile formé par la poignée P3 doit interagir avec le corps virtuel modélisé.

A l'étape 11 suivante, est effectué le calcul des facettes du maillage situées dans le voisinage du sommet déterminé à l'étape 10. Puis, pour chacune des facettes ainsi déterminées, on effectue les étapes suivantes, de façon parallèle ou non.

A l'étape 12, on calcule la projection du point déterminé à l'étape 10 sur la facette considérée.

Puis, à l'étape 13, on calcule les coordonnées barycentriques de la projection calculée à l'étape 12 dans la facette considérée.

A l'étape 14, on détermine le caractère intérieur ou extérieur du point de l'élément mobile. Le point est considéré comme intérieur s'il est situé dans le corps virtuel que l'on modélisé et comme extérieur dans le cas contraire.

A l'étape 15, on calcule le point de la facette le plus proche du point de l'élément mobile si la projection est extérieure à ladite facette.

A l'étape 16, on calcule la profondeur algébrique de pénétration du point de l'élément mobile sous le plan de la facette.

A l'étape 17, on effectue une prise récursive d'une première facette à distance minimale entre le plan de ladite facette et le point de l'élément mobile, et à l'étape 18, on effectue une prise récursive d'une deuxième facette à distance minimale entre la facette et le point de l'élément mobile.

On effectue ensuite un test 19 sur les première et deuxième facettes. Si les première et deuxième facettes sont confondues, on effectue à l'étape 20 le calcul de la normale généralisée qui est une combinaison linéaire des trois normales aux sommets pour une facette triangulaire pondérée par les coordonnées barycentriques calculées à l'étape 13. On calcule ensuite à l'étape 21 le module de la force proportionnelle à la profondeur de pénétration et à une dureté réglable représentative de la dureté du corps que l'on modélise. A l'étape 22, on calcule la direction de la force en fonction de la normale généralisée. On passe ensuite à l'étape 23 de fin.

Alternativement, si à l'étape 19 on a déterminé que les première et deuxième facettes n'étaient pas confondues, on passe à un test 24 sur la position du point de l'élément mobile par rapport à la deuxième facette. Si ledit point est situé sous la deuxième facette, alors on passe à une étape 25 où l'on considère la deuxième facette, puis à une étape 26 où l'on calcule la profondeur de pénétration du point de l'élément mobile comme étant égale à la distance entre la deuxième facette et le point de l'élément mobile, puis on passe à l'étape 20 décrite ci-dessus, de calcul de la normale généralisée.

En cas de réponse négative au test 24, on passe à une étape 27 de calcul d'une troisième facette adjacente à la deuxième facette du côté indiqué par ces coordonnées barycentriques. On passe ensuite à un test 28 sur la position du point d'élément mobile par rapport à la troisième facette. Si le point d'élément mobile est situé sous le plan de la troisième facette, alors on passe à l'étape 25 décrite ci-dessus. Dans le cas contraire, on passe à une étape 29 de confirmation que le point de l'élément mobile est à l'extérieur du corps virtuel, puis à une étape 30 où l'on établit que la force exercée par le corps virtuel sur l'élément mobile est nulle. On passe ensuite à l'étape 23 de fin.

De façon optionnelle, on peut prévoir à l'issue de l'étape 22, de passer à une étape 31, de calcul du couple ramené au point de l'élément mobile, ce dans le cas des systèmes à retour d'effort angulaire. On peut ensuit passer à une étape 32 de calcul de la déformation de la surface, c'est-à-dire de calcul des déplacements des sommets du maillage voisins du point d'impact de l'élément mobile sur ladite surface selon la forme de l'élément mobile et en fonction de la viscosité du corps virtuel.

Alternativement, à l'issue de l'étape 22, on peut générer des pixels colorés dans des cartes de texture bidimensionnelles associées aux facettes, et ce pour une application de peinture.

L'invention permet une modélisation fine et économe en ressource de calcul d'un corps virtuel permettant à un utilisateur de faire usage de son sens du toucher. Les applications d'une telle invention sont extrêmement nombreuses, notamment dans le domaine de la télémédecine, de la téléchirurgie, de la télépalpation, de la télécommande de robots, notamment pour travail en milieu hostile, dans le domaine artistique, dans des applications de peinture ou de sculpture, dans le domaine de l'assistance aux personnes non voyantes pour leur permettre d'appréhender une forme tridimensionnelle, ou encore dans le domaine de l'enseignement.

## Revendications

1. Procédé de construction d'une surface tridimensionnelle d'un corps virtuel en vue d'une interaction d'un élément mobile matériel avec ledit corps, dans lequel on déplace l'élément mobile du système, et on construit une modélisation par maillage en fonction de la position de l'élément mobile, ladite construction comprenant des étapes de :
a) calcul du sommet du maillage le plus proche de l'élément mobile;
b) calcul des facettes du maillage voisines dudit sommet;
c) pour chacune des facettes voisines, calcul de la projection de l'élément mobile sur la facette;
d) calcul du point de la facette la plus proche de l'élément mobile, si ladite projection est extérieure à ladite facette;
e) détermination d'une première facette présentant une distance minimale entre le plan de la première facette et l'élément mobile;
f) détermination d'une deuxième facette présentant une distance minimale avec l'élément mobile;
g) Si les première et deuxième facettes sont confondues, calcul de la normale généralisée, combinaison des normales aux sommets de la facette; et
h) calcul du module de la force proportionnel à la profondeur de pénétration de l'élément mobile dans le maillage.

2. Procédé selon la revendication 1, dans lequel on calcule ensuite la direction de ladite force en fonction de la normale généralisée.

3. Procédé selon la revendication 1 ou 2, dans lequel préalablement à l'étape d), on calcule le caractère intérieur ou extérieur du point de projection de l'élément mobile sur la facette.

4. Procédé selon l'une quelconque des revendications précédentes, dans lequel préalablement à l'étape e), on calcule la profondeur de pénétration de l'élément mobile sous le plan de la facette.

5. Procédé selon la revendication 4, dans lequel on calcule la profondeur algébrique.

6. Procédé selon l'une quelconque des revendications précédentes, dans lequel on calcule les coordonnées barycentriques de ladite projection dans la facette, la normale généralisée étant une combinaison des normales aux sommets de la facette pondérée par lesdites coordonnées barycentriques.

7. Procédé selon l'une quelconque des revendications précédentes, dans lequel le calcul du module de la force est effectué en fonction d'une dureté du corps virtuel.

8. Procédé selon l'une quelconque des revendications précédentes, dans lequel si la deuxième facette est différente de la première et si l'élément mobile est sous le plan de la deuxième facette, on calcule la profondeur de pénétration de l'élément mobile sous le plan de la deuxième facette, égale à la distance entre la deuxième facette et l'élément mobile.

9. Procédé selon l'une quelconque des revendications précédentes, dans lequel si la deuxième facette est différente de la première et si l'élément mobile n'est pas sous le plan de la deuxième facette, on calcule une troisième facette adjacente à la deuxième facette du côté indiqué par ses coordonnées barycentriques.

10. Procédé selon la revendication 9, dans lequel si l'élément mobile est sous le plan de la troisième facette, on calcule la profondeur de pénétration de l'élément mobile sous le plan de la deuxième facette, égale à la distance entre la deuxième facette et l'élément mobile.

11. Procédé selon la revendication 9 ou 10, dans lequel si l'élément mobile n'est pas sous le plan de la troisième facette, on en déduit que l'élément mobile est à l'extérieur du corps virtuel.

12. Procédé selon l'une quelconque des revendications précédentes, dans lequel on calcule ensuite le couple ramené à l'élément mobile.

13. Programme d'ordinateur comprenant des moyens de code-programme pour mettre en oeuvre les étapes du procédé selon l'une quelconque des revendications 1 à 12, lorsque ledit programme fonctionne sur un ordinateur.

14. Système de construction à distance d'une surface tridimensionnelle d'un corps virtuel, **caractérisé par le fait qu'**il comprend un élément mobile (SE2) apte à entrer en contact virtuel avec ladite surface à construire et pourvu d'actionneurs et de capteurs de force et/ou de position, une unité de calcul, une modélisation de la surface stockée dans une mémoire, ladite modélisation comprenant un maillage en fonction de la position de l'élément mobile, et un moyen pour calculer le sommet du maillage le plus proche de l'élément mobile, calculer des facettes du maillage voisines dudit sommet, pour chacune des facettes voisines, calculer la projection de l'élément mobile sur la facette, calculer le point de la facette la plus proche de l'élément mobile, si ladite projection est extérieure à ladite facette, déterminer une première facette présentant une distance minimale entre le plan de la première facette et l'élément mobile, déterminer une deuxième facette présentant une distance minimale avec l'élément mobile, si les première et deuxième facettes sont confondues, calculer la normale généralisée, combinaison des normales aux sommets de la facette, et calculer le module de la force proportionnel à la profondeur de pénétration de l'élément mobile dans le maillage.
